# EUROPEAN PATENT APPLICATION

(11) **EP 1 722 518 A1**
(43) Date of publication of application: **15.11.2006**
(21) Application number: 05103987.3
(22) Date of filing: 12.05.2005
(51) Int. Cl.: H04L 12/56, H04L 12/46

(54) **Method, network bridge, network switch, computer program product and computer usable medium for minimizing convergence time in case of a root bridge failure**

(71) Applicant: SIEMENS AKTIENGESELLSCHAFT, 80333 München (DE)
(72) Inventor: Dr. Andreas Iselt, 82110 Germering (DE); Sandrine Pasqualini, 81543 München (DE); Thomas Schwabe, 81827 München (DE); Elie Sfeir, 80333 München (DE)

(57) **Abstract**

The present invention relates to a method, a network bridge and a network switch for minimizing convergence time in case of a root bridge failure. The method comprises the steps of detecting a root bridge failure in a network, and notifying all bridges in the network of the root bridge failure. In accordance with an embodiment of the invention, a Root Failure Notification Bridge Protocol Data Unit is sent for notification, and the notification triggers a computation of a new spanning tree.

## Description

The present invention relates to a method and a network for minimizing convergence time in case of a root bridge failure.

In Ethernet packet switched networks that use the Rapid Spanning Tree Protocol (RSTP), root bridge failures can cause significant delays. The treatment of a root bridge failure can be seen as a re-initialization of a network, since all bridges need to re-elect a new root bridge, and thus the network convergence time after a root bridge failure should be comparable to the start-up convergence time for the same network (usually in the sub-second range). Unfortunately, convergence times of 10 seconds or more are often experienced depending on the network size and message age timer values.

The reason for this difference lies in the topology change detection mechanism of the RSTP. As specified in the standard, a loss of connectivity is not notified as a topology change by RSTP, but rather, the concerned bridges "silently" transition their ports appropriately, without notifying all the bridges in the network of the change. This mechanism proved to be efficient when it came to link failures.

In case of a root bridge failure, no topology change notification is sent to all bridges. Only bridges directly connected to the root bridge and detecting its failure try to restore the lost connectivity via their alternate ports. Only these bridges quickly realize that the root bridge is down, and start advertising a new root bridge, initially the transmitting bridge itself to all other bridges in the network, just as in a normal start-up procedure of a bridge. Distant bridges still believe that the old root bridge is up and will not accept the newly advertised root bridge, which has a greater MAC address than the failing root bridge, simply because their information has not aged out yet.

This is where a *MaxAge* parameter comes into action. It specifies the amount of time that any information received in a configuration message can be used before it is outdated. The information can be renewed when a message conveying the same information is received. Once the information is outdated, new lower priority information such as a new root bridge identifier can be used instead. Stated simply, all bridges that are not connected to the failing root bridge will not accept nor forward a new root bridge identifier conveyed in Bridge Protocol Data Units (BPDUs) from the bridges neighboring the failing root bridge. Only after the information held for the failing root bridge has timed out, all bridges will select a new root bridge together.

The *MaxAge* parameter has a default value of 20, but it can not be easily converted into time units. According to the specifications, the information is timed out if it is not renewed for an interval of three times the Hello Time interval at maximum. However, it can be timed out before according to a calculated effective information age.

All existing solutions are based on timers. Some proprietary solutions claim to use faster timers than specified in the standard to time out old port information on distant bridges, before the new root bridge BPDUs carrying lower priority information - in particular a numerically higher root bridge identifier than the failing root bridge -, are accepted by those bridges. This could be done by advertising a small value for the *Max Age* parameter inside BPDUs transmitted by bridges realizing the root bridges failure, i.e. bridges directly connected to the failing root bridge. This approach decreases the delay between root bridge failure and spanning tree re-computation to a few seconds, but several BPDUs still need to be exchanged before all port information is timeout in the bridges.

In case of a link or non-root bridge failure, RSTP bridges restore connectivity via alternate and backup ports without sending any topology change notifications, by setting the topology change flag in the BPDUs. This poses a problem when it comes to the specific case of a root bridge failure. Here, connectivity can not be restored as a new root bridge must be elected, and the whole tree recomputed. In standard RSTP, a bridge neighboring the failing root bridge starts advertising a new root bridge (initially itself), however these BPDUs are not accepted by distant bridges as they still believe the old root bridge is up - until the old root information timeouts.

As a consequence, multiple BPDUs have to be transmitted before all bridges start accepting a new root. Therefore, re-initialization of the network is delayed.

The object of the invention is thus to develop a method, a network bridge and a network switch for minimizing convergence time in case of a root bridge failure that can achieve lower convergence times than the methods described above.

In accordance with the invention this object is achieved by a method in accordance with claim 1, by a network switch in accordance with claim 6, and by a network bridge in accordance with claim 7. Further embodiments of the invention are produced by the remaining claims.

The method for minimizing convergence time in case of a root bridge failure comprises the steps of detecting a root bridge failure in a network, and notifying all bridges in the network of the root bridge failure. The notification triggers a computation of a new spanning tree.

The network bridge and the network switch for minimizing convergence time in case of a root bridge failure have means to execute this method.

Said method, said network switch and said network bridge have the advantage of minimizing convergence time in case of a root bridge failure to the sub-second range.

In accordance with an embodiment of the invention, a Bridge Protocol Data Unit is sent for notification, and the Bridge Protocol Data Unit comprises an identifier of the failing root bridge.

By sending a Bridge Protocol Data Unit that comprises an identifier of the failing root bridge, looping notifications can be avoided. Furthermore, the effect on receiving bridges is that they accept inferior messages that carry a new root bridge identifier, even though these messages have an identifier numerically higher than the identifier of the old failing root bridge, and thus compute a new spanning tree.

In accordance with another embodiment of the invention, the detection and notification is performed by one or more bridges neighbouring the root bridge.

This allows for quick notification as bridges neighbouring the root bridge are the first to realize its failure.

In accordance with a further embodiment of the invention, multiple Root Failure Notification Bridge Protocol Data Units are sent for notification.

Sending multiple Root Failure Notification Bridge Protocol Data Units is particularly useful in case of frame losses.

In accordance with yet another embodiment of the invention, the method can be implemented in a protocol.

By defining an according protocol, the method can be reliably implemented in a network. As an example, the current Rapid Spanning Tree Protocol according to standard IEEE 802.1-w can be extended to implement the method.

The computer program product is directly loadable into the internal memory of a network switch or network bridge and comprises software code portions for performing the steps of the above mentioned method when said program is run on a network switch or network bridge.

On the computer usable medium a computer program is stored. The computer program comprises software code portions for performing the steps of the above mentioned method when said program is loaded into the internal memory of a network bridge or network switch.

Exemplary embodiments of the invention are explained in more detail below with reference to the drawings. The figures show:

Figure 1 a RFN BPDU format,

Figure 2 a list of actions to be executed when sending a configuration BPDU,

Figure 3 a list of actions to be executed when receiving a RFN BPDU,

Figure 4 a sample topology,

Figure 5 action sequences to be executed when sending a configuration BPDU,

Figure 6 actions sequences to be executed when receiving a RFN BPDU.

In accordance with an embodiment of the invention, all bridges in a network are notified of a root bridge failure with minimal delays, and explicitly trigger a recomputation of a spanning tree by electing a new root bridge. Thus, network convergence time is minimized in case of a root bridge failure.

In accordance with the embodiment, all bridges in the network - including distant ones - are notified of the root bridge failure via a Root Failure Notification Bridge Protocol Data Unit (RFN BPDU) transmitted by neighbouring bridges of the root bridge that realize its failure. The desired effect of the RFN BPDU on receiving bridges is that they accept inferior messages that carry a new root bridge identifier, even though these messages have an identifier numerically higher than the identifier of the old failing root bridge, and thus compute a new spanning tree.

Although it is possible to encode a "root failure" condition in one of the unused RSTP BPDU flag (octet 5) bits (bit 8 which is always set to 1 for example), one would face the problem of root notifications looping in the network, and bridges constantly accepting worse BPDUs. This could be solved by the use of timers which are highly dependant on the network topology and therefore should be avoided.

On the other hand, by defining a new RFN BPDU, we can include the identifier of the failing root bridge, thus solving the looping notifications problem above. All what a bridge has to do when receiving a RFN BPDU is to check whether the advertised failing root bridge has already been removed from its bridge/port information. If the latter does not contain the advertised failing root identifier, then the current bridge has already received and processed the notification before. Another benefit of advertising the identifier of the failing root bridge is that the RFN BPDU can be sent more than once to ensure that all bridges receive it, without "harming" notification loops. This is particularly useful in case of frame losses.

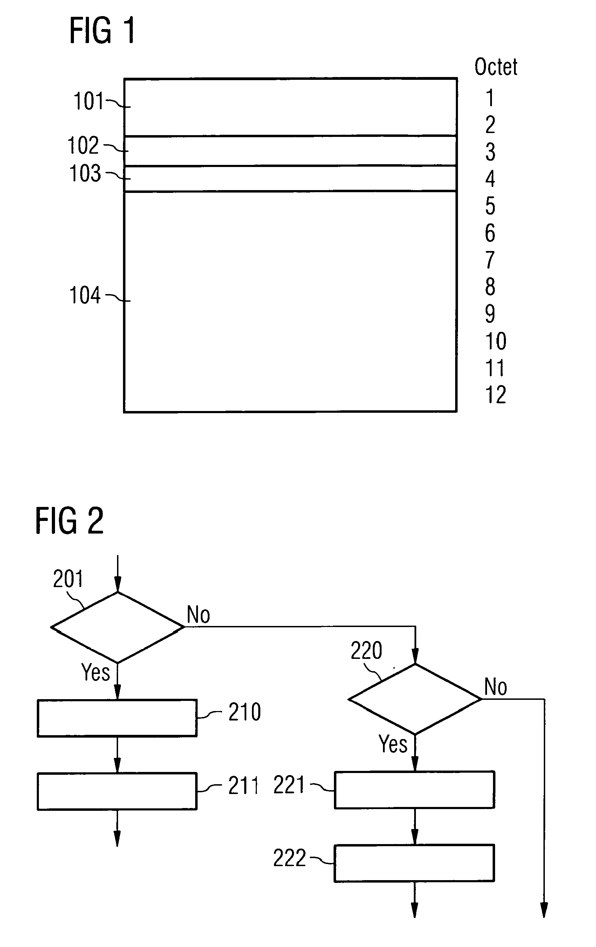

Figure 1 depicts a proposed format for the RFN BPDU. A Protocol Identifier 101 is encoded in Octets 1 and 2 and takes the value 0000 0000 0000 0000 which identifies RSTP. A Protocol Version Identifier 102 is encoded in Octet 3 and takes the value 0000 0010. A BPDU Type 103 is encoded in Octet 4. This field takes the value 0000 0011 and denotes a RFN BPDU. A Root Bridge Identifier 104 (rootld) is encoded in Octets 5 through 12 and corresponds to the identifier of the failing root bridge.

Next, the embodiment addresses two design issues concerning the operation of the root failure notification:
1. When should a bridge transmit RFN BPDUs, and for how long?
2. What should a bridge do when receiving an RFN BPDU?

Regarding a), Figure 2 shows a diagram of actions to be executed. As was mentioned above, a bridge transmits RFN BPDUs when it realizes that the root bridge has gone down, i.e. when it starts advertising a root bridge (initially itself) other than the old one. This is true when a configuration BPDU is to be transmitted and condition (1) is true:

*(newRootld == Bridgeldentifier)* &&
(oldRootld != Bridgeldentifier) (1)

After testing condition (1) in a step 201, a counter *txRFN* for RFN BPDU transmissions is reset to zero (default value txRFNmax) and the bridge identifier of the failing root bridge (oldRootld) is saved in failingRootld, in step 210. Note that oldRootld is derived from bridge.rootPriority.rootld before the new root identifier is written to this variable. Afterward in a step 211, all port/bridge information is reset or deleted, and all state machines are transitioned to their initial state, as in a normal bridge initialization. This explicit bridge restart will trigger the transmission of configuration BPDUs with a root bridge identifier equal to the sending bridge identifier, preceded by RFN BPDU transmissions as described below.

The second part of condition (1) guarantees that the bridge will not keep restarting during a normal start-up (in which the old root bridge is the bridge itself).

When condition (1) is evaluated as false in step 201, another branch of operations is executed. To ensure that all bridges receive an RFN BPDU at least once (especially in case of frame losses), according to the embodiment a bridge transmits a total number of *txRFNmax* RFN BPDUs on each port, at the same rate as the configuration BPDUs. Whenever a configuration BPDU is to be sent, in a step 220 it is tested if the counter txRFN is smaller than the limit txRFNmax. If so, a RFN BPDU created in a step 221. Here, the Root Bridge Identifier 104 field in the RFN BPDU is set to the value of failingRootld. In a following step 222, the RFN BPDU is transmitted on each port, and the counter txRFN is then increased.

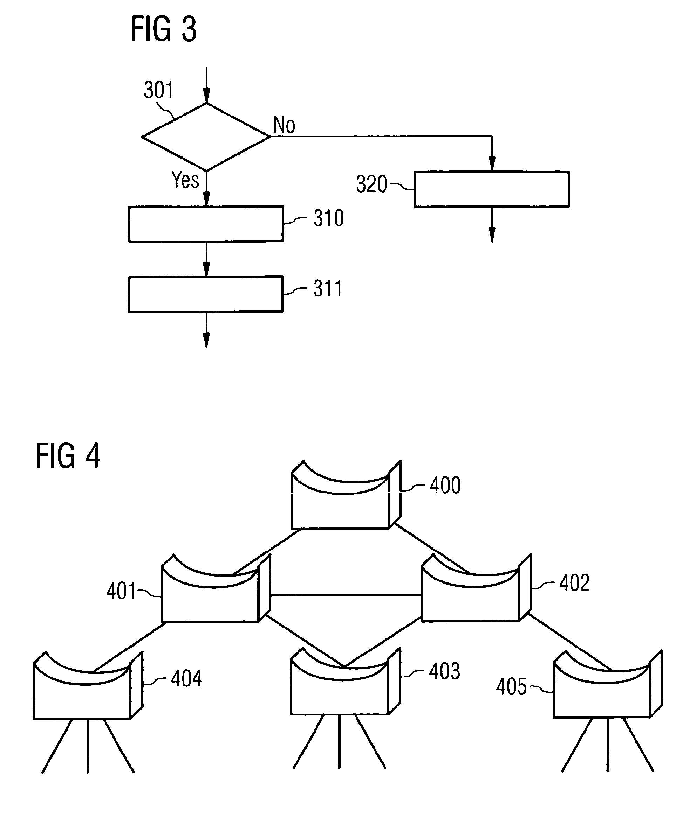

Regarding design issue b), Figure 3 shows a diagram of actions to be executed whenever an RFN BPDU is received by a bridge. Upon reception of an RFN BPDU, a bridge should react similar to the bridge that realized the root bridge failure as follows. Firstly, a condition (2) is tested in a step 301. Condition (2) is defined as:

*(NotBPDU.rootld == bridge.rootPriority.rootld)* ∥

*(NotBPDU.rootld == port[1].designatedPriority.rootld)* ∥

...

*(NotBPDU.rootld == port[n].designatedPriority.rootld)*

Here, NotBPDU refers to the RFN BPDU received. If according to condition (2) the *Root Bridge Identifier* 104 (rootld) carried in the RFN BPDU is present in the bridge root priority vector or any of the port designated priority vectors, then the receiving bridge is not yet aware of the root bridge failure. In this case, in a step 310 the counter txRFN for RFN BPDU transmissions is reset to zero (default value txRFNmax), the root bridge identifier 104 (rootld) of the failing root bridge carried in the RFN BPDU is saved in failingRootld. Next, in a step 311 all port/bridge information is reset or deleted, and all state machines are transitioned to their initial state, as in a normal bridge initialization. This explicit bridge restart will trigger the transmission of configuration BPDUs with a root identifier equal to the sending bridge identifier preceded by RFN BPDU transmissions.

If condition (2) is not satisfied in step 301, then the bridge is already aware of the root bridge failure from a previous redundant RFN BPDU and has already restarted, and therefore it will discard the received RFN BPDU in a step 320. The next configuration BPDU transmission will trigger the sending of an RFN BPDU if necessary (if *txRFN* smaller than txRFNmax).

According to an embodiment of the invention, a detailed scenario will be described below. A root bridge failure and a series of actions that have to be taken by each of the network bridges will be explained.

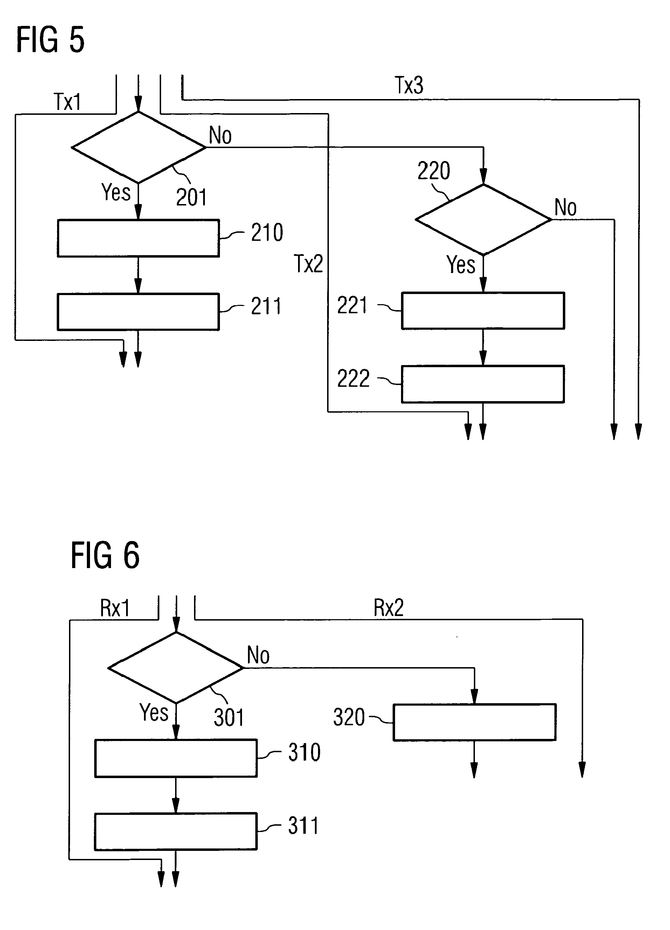

Figure 4 depicts a sample topology where bridge 400 is the failing root bridge. We assume that first bridge 401 and then bridge 402 realize that the bridge 400 is down. Bridge 403 will be receiving RFN BPDUs from both bridge 401 and bridge 402. As depicted in figure 5 and figure 6, the sequence of actions at each bridge is as follows (with steps 201, 210, 211, 220, 221, 222, 301, 310, 311, 320 identifying the same steps as in figures 2 and 3):
1. Bridge 401 realizes that bridge 400 is down and goes into branch Tx1, thereby executing steps 201, 210 and 211. It restarts and goes into branch Tx2, thus executing steps 201, 220, 221 and 222, before sending the first configuration BPDU. In step 222 the first RFN BPDU is sent out on all ports. Bridge 401 will go into this same branch Tx2 every time a configuration BPDU is to be sent until *txRFNmax* is reached. Branch Tx3 will be entered after txRFNmax RFN BPDUs are sent out, and corresponds to the normal RSTP operation.
2. Bridge 402 could either realize itself that bridge 400 is down before receiving the first RFN BPDU sent by bridge 401 and go into the same steps as in a), or receive the RFN BPDU from bridge 401 and go into branch Rx1 (figure 6), thus executing steps 301, 310 and 311, then restart and go into branch Tx2 (figure 5), thereby executing steps 201, 220, 221 and 222, before sending the first configuration BPDU. In step 222 the first RFN BPDU is sent out on all ports. Bridge 402 will go into this same branch Tx2 every time a configuration BPDU is to be sent until *txRFNmax* is reached. Branch Tx3 will be entered after txRFNmax RFN BPDUs are sent out, and corresponds to the normal RSTP operation.
3. Bridge 403 (and all other bridges not directly connected to the failing root, bridge 400) will go into branch Rx1 when it receives the first RFN BPDU (typically from bridge 401 or bridge 402), restart and go into branch Tx2 before sending the first configuration BPDU. In branch Tx2 and step 222, the first RFN BPDU is sent out on all ports. Bridge 403 will go into this same branch Tx2 every time a configuration BPDU is to be sent until *txRFNmax* is reached. Branch Tx3 will be entered after txRFNmax RFN BPDUs are sent out, and corresponds to the normal RSTP operation.
4. For all bridges that receive a redundant RFN BPDU (i.e. not the first one for a certain failing root), branch Rx2 is entered (figure 6) and the RFN BPDU is simply discarded in step 320. Another one will be sent if necessary (i.e. if *txRFN* is smaller than txRFNmax upon the next configuration BPDU transmission).

Note that branches Tx1 (figure 5) and Rx1 (figure 6) consist of the same actions. Branch Tx1 is entered only by bridges that realize the root failure. On the other hand, branch Rx1 is entered only by bridges that receive the first RFN BPDU.

## Claims

1. A method for minimizing convergence time in case of a root bridge failure, said method comprising the steps of:-
- detecting a root bridge failure in a network,
- notifying all bridges in the network of the root bridge failure, and
- the notification triggering a computation of a new spanning tree.

2. Method according to claim 1,
- sending a Bridge Protocol Data Unit for notification,
- the Bridge Protocol Data Unit comprising an identifier of the failing root bridge.

3. Method according to claim 1,
the detection and notification being performed by one or more bridges neighbouring the root bridge.

4. Method according to claim 2,
sending multiple Root Failure Notification Bridge Protocol Data Units for notification.

5. Method according to claim 1,
the method being implemented in a protocol.

6. A network switch for minimizing convergence time in case of a root bridge failure, with means to execute the method of claim 1.

7. A network bridge for minimizing convergence time in case of a root bridge failure, with means to execute the method of claim 1.

8. A computer program product,
directly loadable into the internal memory of a network bridge or network switch, comprising software code portions for performing the steps of claim 1 when said program is run on a network bridge or network switch.

9. A computer usable medium,
on which a computer program is stored, the computer program comprising software code portions for performing the steps of claim 1 when said program is loaded into the internal memory of a network switch or network bridge.
